# EUROPÄISCHE PATENTANMELDUNG

(11) **EP 1 886 846 A1**
(43) Veröffentlichungstag der Anmeldung: **13.02.2008**
(21) Anmeldenummer: 07015182.4
(22) Anmeldetag: 02.08.2007
(51) Int. Cl.: B60D 1/52

(54) **Kupplungsvorrichtung mit Bajonettverschluss**

(30) Priorität: 04.08.2006 DE 202006012096 U
(71) Anmelder: Sauermann, Hans, 85119 Ernsgaden (DE)
(72) Erfinder: Sauermann, Hans, 85119 Ernsgaden (DE)
(74) Vertreter: Witzany, Manfred

(57) **Zusammenfassung**

Eine Kupplungsvorrichtung (1) weist mindestens zwei lösbar miteinander mittels eines Bajonettverschlusses (5) kuppelbare Elemente (3, 4) auf. Eines der Elemente (4) ist dabei fahrzeugfest montiert, während das andere (3) ein Kupplungsglied (2) trägt. Den kuppelbaren Elementen (3, 4) ist außerdem mindestens eine Verdrehsicherung (14) zugeordnet. Diese Verdrehsicherung (14) wird von einem am Element (3) gelagerten Schwenkhebel (14) gebildet, der in der Sperrstellung in eine Ausnehmung (17) des anderen Elements (4) eingreift. In der Freigabestellung ist er aus der Ausnehmung (17) zurückgezogen. Zur Erhöhung der Betriebssicherheit dieser Kupplungsvorrichtung (1) ist an dem Element (3) ein Sicherungsstift (19) verstellbar gehalten, der federnd gegen eine Sicherungsstellung vorgespannt ist. In dieser Sicherungsstellung wird der Schwenkhebel (14) in seiner Sperrstellung gehalten.

## Beschreibung

Die Erfindung betrifft eine Kupplungsvorrichung mit mindestens zwei lösbar mittels eines Bajonettverschlusses kuppelbaren Elementen gemäß dem Oberbegriff des Patentanspruchs 1.

Aus der EP 0 568 921 B1 ist eine gattungsgemäße Kupplungsvorrichtung bekannt. Sie besteht aus zwei miteinander mittels eines Bajonettverschlusses kuppelbaren Elementen, von denen eine fahrzeugfest ausgebildet ist, während die andere ein Kupplungsglied trägt. Am fahrzeugfesten Element ist außerdem ein Schwenkhebel gelagert, der in eine Ausnehmung des kupplungsseitigen Elements eingreifen kann. An diesem Schwenkhebel ist ein Schiebeschlitten befestigt, der in eine Tasche des kupplungsseitigen Elements eingreifen kann, um eine ungewollte Betätigung des Schwenkarms zu verhindern. Diese Kupplungsvorrichtung hat sich in der Praxis gut bewährt und bildet den Ausgangspunkt der vorliegenden Erfindung.

Der Erfindung liegt die Aufgabe zugrunde, eine Kupplungsvorrichtung der eingangs genannten Art zu schaffen, die sich durch eine erhöhte Betriebssicherheit auszeichnet.

Diese Aufgabe wird erfindungsgemäß mit den Merkmalen des Patentanspruchs 1 gelöst.

Die Kupplungsvorrichtung gemäß Anspruch 1 weist mindestens zwei miteinander kuppelbare Elemente auf. Eines der Elemente ist fahrzeugfest, während ein anderes ein Kupplungsglied trägt. Auf diese Weise kann das Kupplungsglied sehr einfach abmontiert werden, wenn am Zugfahrzeug keine Kupplung benötigt wird. Außerdem ist es sehr einfach möglich, verschiedene Kupplungsglieder je nach Bedarf gegeneinander auszutauschen, um beispielsweise eine Kugelkupplung, eine Bolzenkupplung, eine Hakenkupplung oder eine Pitonkupplung an einem Zugfahrzeug nutzen zu können. Zur Erzielung einer einfachen Montage- bzw. Demontage des kupplungsgliedseitigen Elements sind die Elemente mittels eines Bajonettverschlusses lösbar miteinander kuppelbar. Ein derartiger Bajonettverschluß besteht vorzugsweise aus einem zylindrischen Schaft mit radialen Vorsprüngen, der mit einem Rohrstutzen mit nach innen gerichteten radialen Vorsprüngen zusammenwirkt. Die Vorsprünge sind dabei in Umfangsrichtung gesehen mindestens so weit beabstandet, daß die radialen Vorsprünge des Gegenstücks des Bajonettverschlusses in diese Abstände eingreifen können, so daß in einer bestimmten Drehlage beide Teile axial gegeneinander verschiebbar sind. In vollständig eingesteckter Lage sind die beiden Elemente gegeneinander verdrehbar, so daß die Vorsprünge beider Elemente hintereinander zu liegen kommen und eine axiale Verstellung der Elemente gegeneinander verhindern. Um ein ungewünschtes Verdrehen der Elemente gegeneinander zu verhindern, weist eines der Elemente einen Schwenkhebel auf, der zwischen einer Sperrstellung und einer Freigabestellung verschwenkbar ist. In der Sperrstellung greift er in eine Ausnehmung des anderen Elements ein, wodurch eine Verdrehung beider Elemente gegeneinander und damit ein Lösen des Bajonettverschlusses verhindert wird. In der Freigabestellung dagegen ist der Schwenkhebel aus der Ausnehmung des anderen Elements zurückgezogen, so daß beide Elemente zur Lösung des Bajonettverschlusses gegeneinander verdrehbar sind. Um den Schwenkhebel gegen unbeabsichtigtes Verschwenken zu sichern, ist diesem ein Sicherungsstift zugeordnet, der im selben Element verstellbar gehalten ist, in dem auch der Schwenkhebel gelagert ist. Dieser Sicherungsstift ist federnd gegen eine den Schwenkhebel in seiner Sperrstellung haltenden Sicherungsstellung vorgespannt. Zum Lösen des kupplungsseitigen Elements muß demnach zunächst der Sicherungsstift gegen die Kraft der Feder zurückgezogen werden, wobei anschließend der Schwenkhebel in die Freigabestellung verschwenkt wird. Während dieses Schwenkvorgangs muß der Sicherungsstift in seiner Entsperrstellung gehalten werden. Diese doppelte Betätigung verhindert jegliches unbeabsichtigtes Entsperren der Kupplungsvorrichtung. Nun muß der Schwenkhebel in der Freigabestellung gehalten werden, während die Elemente gegeneinander so weit verdreht werden, bis die Vorsprünge des Bajonettverschlusses außer Eingriff geraten und das kupplungsgliedseitige Element einfach abgezogen werden kann. Auf diese Weise ergibt sich eine sehr betriebssichere Festlegung des Kupplungsglieds am Fahrzeug.

Zur Erzielung einer einfachen Handhabbarkeit der Kupplungsvorrichtung ist es gemäß Anspruch 2 vorteilhaft, wenn der Sicherungsstift im fahrzeugfesten Element gelagert ist.

Um zu verhindern, daß Kräfte, die auf den Schwenkhebel einwirken, direkt auf den Sicherungsstift übertragbar sind, ist es gemäß Anspruch 3 günstig, wenn der Sicherungsstift quer zur Verstellrichtung des Schwenkhebels verstellbar ist. Vorzugsweise sind der Schwenkhebel und der Sicherungsstift in einem Winkel von 90° zueinander verstellbar, so daß jegliche Kraftübertragung auf den Sicherungsstift ausgeschlossen ist. Da der Sicherungsstift im Gegensatz zum Schwenkhebel recht kleinbauend und damit mit geringer Masse hergestellt werden kann, wirken sich Erschütterungen, die bei der Fahrt auftreten, praktisch nicht mehr auf den Sicherungsstift aus. Eine Federvorspannung, die von Hand überwindbar ist, reicht in diesem Fall aus, um den Sicherungsstift in allen erdenklichen Betriebslagen zuverlässig in der Sicherungsstellung zu halten.

Um die Bedienung der Kupplungsvorrichtung zu vereinfachen, ist es gemäß Anspruch 4 vorteilhaft, wenn der Sicherungsstift in der Freigabestellung des Schwenkhebels von diesem in einer zurückgezogenen Entsperrstellung gehalten ist. Auf diese Weise wird erreicht, daß der Sicherungsstift nach dem Verschwenken des Schwenkhebels in die Freigabestellung losgelassen werden kann. Die Hand, die zuvor den Sicherungsstift zurückgezogen und gehalten hat, kann demnach das Kupplungsglied bzw. das kupplungsgliedseitige Element ergreifen und verdrehen, um den Bajonettverschluß zu lösen. Alle Betätigungen zum Lösen bzw. Verbinden des Bajonettverschlusses sind demnach über Zweihandbedienungen möglich.

Während der Fahrt treten zum Teil erhebliche Stöße auf, die u. a. auch auf den Schwenkhebel einwirken. Diese Kräfte versuchen den Schwenkhebel in verschiedene Richtungen zu bewegen, was zu Schlägen im Mechanismus führen kann. Um sowohl die damit verbundene Geräuschentwicklung als auch die hiervon hervorgerufenen Verschleißerscheinungen zu mindern, ist es gemäß Anspruch 5 günstig, wenn der Schwenkhebel bzw. die Ausnehmung im gegenüberliegenden Element in Richtung der Sperrstellung verjüngend ausgebildet ist. Der Schwenkhebel ist dabei gegen die Sperrstellung vorgespannt. Durch diese besondere geometrische Ausbildung wird erreicht, daß der Schwenkhebel spielfrei in der Ausnehmung gehalten ist, da er gerade so tief in die Ausnehmung eingedrückt werden kann, daß er an den sich verjüngenden Flanken der Ausnehmung zur Anlage kommt. Durch die federnde Vorspannung des Schwenkhebels verbleibt dieser auch in dieser Stellung. Da der Schwenkhebel keinerlei Bewegungen mehr ausführen kann, treten keine Schläge im Mechanismus auf.

Schließlich ist es gemäß Anspruch 6 günstig, wenn der Bajonettverschluß mit einem Schloß zusammenwirkt, welches mittels eines Schlüssels verstellbar ist. In der Schließstellung dieses Schlosses bildet dieses eine Verdrehsicherung für die Elemente gegeneinander, so daß ein Lösen der Elemente für Unbefugte, die nicht im Besitz des geeigneten Schlüssels sind, unmöglich ist. Auf diese Weise wird zuverlässig verhindert, daß Unbefugte den Bajonettverschluß öffnen, um einen mit der Anhängerkupplung gekuppelten Anhänger zu entwenden.

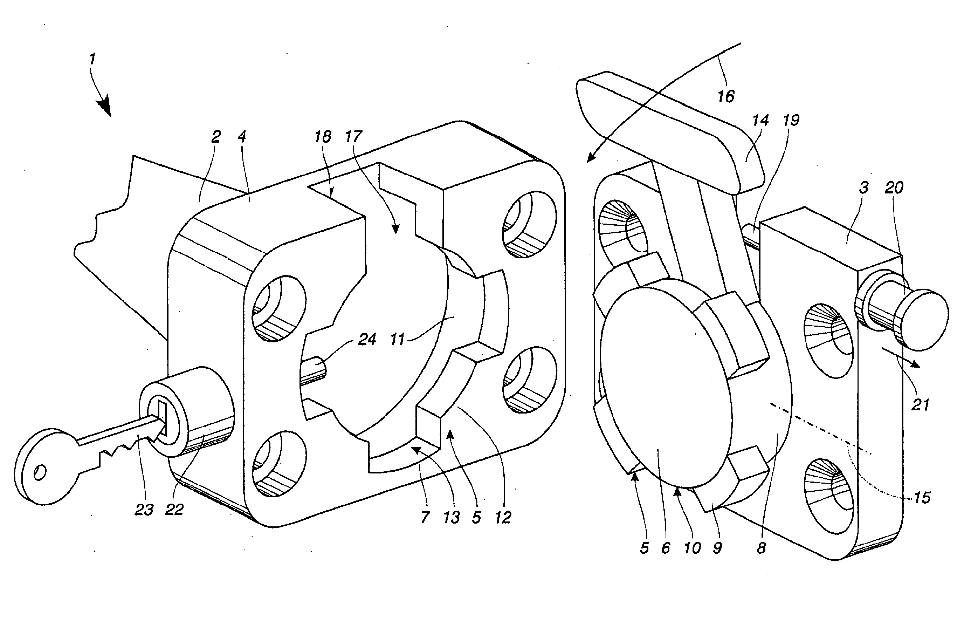

Der Neuerungsgegenstand wird beispielhaft anhand der Zeichnung erläutert, ohne den Schutzumfang zu beschränken.

Die einzige Figur zeigt eine räumliche Darstellung einer Kupplungsvorrichtung 1 mit abgenommenem Kupplungsglied 2. Das Kupplungsglied 2 ist im dargestellten Ausführungsbeispiel als Kugelkopfkupplung dargestellt, wobei alternativ auch andere Kupplungssysteme wie beispielsweise Bolzenkupplungen, Hakenkupplungen, Pitons oder dgl. denkbar sind. Insbesondere ist daran gedacht, die Kupplungsvorrichtung 1 dazu zu nutzen, unterschiedliche Kupplungsglieder 2 mit einem Zugfahrzeug zu verbinden.

Um das Kupplungsglied 2 vom Fahrzeug abnehmen zu können, weist die Kupplungsvorrichtung 1 zwei Elemente 3, 4 auf, die einen Bajonettverschluß 5 bilden. Dieser Bajonettverschluß 5 wird von zwei Verschlußelementen 6, 7 gebildet, die ineinandergreifend ausgebildet sind. Das Verschlußelement 6 besteht aus einem zylindrischen Schaft 8, an dem vier radial nach außen gerichtete Vorsprünge 9 angeformt sind. Zwischen diesen Vorsprüngen 9 sind Freiräume 10 vorgesehen. Das gegenüberliegende Verschlußelement 7 ist im wesentlichen in Form eines Rohrstutzens 11 ausgebildet, der radial nach innen gerichtete Vorsprünge 12 aufweist. Auch zwischen den Vorsprüngen 12 sind Freiräume 13 vorgesehen. Die Freiräume 10, 13 sind derart ausgebildet, daß die Vorsprünge 9, 12 in diese eindringen können, wodurch in einer besonderen Drehlage der Elemente 3, 4 zueinander diese axial verschiebbar sind. Durch Verdrehen der Elemente 3, 4 gegeneinander überdecken sich die Vorsprünge 9, 12 in axialer Richtung, so daß die Elemente 3, 4 aneinander festgelegt sind.

Um ein ungewolltes Verdrehen der Elemente 3, 4 gegeneinander und damit eine Lösung der Verbindung zwischen dem Fahrzeug und dem Kupplungsglied 2 zu verhindern, ist im Element 3 ein Schwenkhebel 14 um eine Schwenkachse 15 verschwenkbar abgestützt. Dieser Schwenkhebel 14 ist dabei zwischen der dargestellten Sperrstellung in Richtung des Pfeiles 16 zu einer nicht dargestellten Freigabestellung verstellbar gehalten. In der Sperrstellung greift der Schwenkhebel 14 in eine Ausnehmung 17 des Elements 4 ein. Auf diese Weise wird ein ungewolltes Verdrehen des Elements 4 gegenüber dem Element 3 in der Sperrstellung des Schwenkhebels 14 verhindert. Über eine nicht dargestellte Feder wird der Schwenkhebel 14 in Richtung der Sperrstellung vorgespannt. Die Ausnehmung 17 weist Seitenflächen 18 auf, welche vom Element 3 zum Kupplungsglied 2 hin betrachtet konvergent ausgebildet sind. Der Freiraum 17 verjüngt sich daher zum Kupplungsglied 2 hin. Auf diese Weise wird erreicht, daß der Schwenkhebel 14 in der Ausnehmung 17 spielfrei gehalten ist.

Um ein ungewolltes Verstellen des Schwenkhebels 14 in die Freigabestellung zu verhindern, ist im Element 3 ein Sicherungsstift 19 verschiebbar gelagert. Dieser Sicherungsstift 19 ist über eine nicht dargestellte Feder in Richtung der dargestellten Sicherungsstellung vorgespannt und kann mittels einer Handhabe 20 in Richtung des Pfeiles 21 verstellt werden, um in eine Entsperrstellung zu gelangen. In der Sicherungsstellung hintergreift der Sicherungsstift 19 den Schwenkhebel 14 und verhindert auf diese Weise, daß dieser in Richtung des Pfeiles 16 in die Freigabestellung gelangt.

Am Element 4 ist außerdem ein Schloß 22 vorgesehen, welches mit einem Schlüssel 23 betätigbar ist. Das Schloß 22 weist einen Stift 24 auf, der durch Verdrehen des Schlosses 22 axial verstellbar ist. Der Stift 24 greift in einen der Freiräume 10 zwischen den Vorsprüngen 9 des Elements 3 ein und verhindert damit ein unberechtigtes Lösen des Bajonettverschlusses 5.

### Bezugszeichenliste

- 1: Kupplungsvorrichtung
- 2: Kupplungsglied
- 3, 4: Element
- 5: Bajonettverschluß
- 6, 7: Verschlußelement
- 8: Schaft
- 9: Vorsprung
- 10: Freiraum
- 11: Rohrstutzen
- 12: Vorsprung
- 13: Freiraum
- 14: Schwenkhebel
- 15: Schwenkachse
- 16: Pfeil
- 17: Ausnehmung
- 18: Seitenfläche
- 19: Sicherungsstift
- 20: Handhabe
- 21: Pfeil
- 22: Schloß
- 23: Schlüssel
- 24: Stift

## Patentansprüche

1. Kupplungsvorrichtung mit mindestens zwei lösbar mittels eines Bajonettverschlusses (5) kuppelbaren Elementen (3, 4), von denen eines fahrzeugfest montierbar ist und eines ein Kupplungsglied (2) trägt, wobei den kuppelbaren Elementen (3, 4) mindestens eine Verdrehsicherung (14) zugeordnet ist, die von einem an einem der Elemente (3) gelagerten Schwenkhebel (14) gebildet ist, der in einer Sperrstellung in eine Ausnehmung (17) des anderen Elements (4) eingreift und in einer Freigabestellung aus dieser zurückgezogen ist, **dadurch gekennzeichnet, daß** in dem den Schwenkhebel (14) tragenden Element (3) ein Sicherungsstift (19) verstellbar gehalten ist, der federnd gegen eine den Schwenkhebel (14) in der Sperrstellung haltenden Sicherungsstellung vorgespannt ist.

2. Kupplungsvorrichtung nach Anspruch 1, **dadurch gekennzeichnet, daß** der Sicherungsstift (19) im fahrzeugfesten Element (3) gelagert ist.

3. Kupplungsvorrichtung nach Anspruch 1 oder 2, **dadurch gekennzeichnet, daß** der Sicherungsstift (19) quer zur Verstellrichtung (16) des Schwenkhebels (14) verstellbar ist.

4. Kupplungsvorrichtung nach mindestens einem der Ansprüche 1 bis 3, **dadurch gekennzeichnet, daß** der Sicherungsstift (19) in der Freigabestellung des Schwenkhebels (14) von diesem in einer zurückgezogenen Entsperrstellung gehalten ist.

5. Kupplungsvorrichtung nach mindestens einem der Ansprüche 1 bis 4, **dadurch gekennzeichnet, daß** der Schwenkhebel (14) federnd gegen die Sperrstellung vorgespannt ist und der Schwenkhebel (14) und/oder die Ausnehmung (17) in Richtung der Sperrstellung verjüngend ausgebildet ist/sind.

6. Kupplungsvorrichtung nach mindestens einem der Ansprüche 1 bis 5 oder nach dem Oberbegriff des Anspruchs 1, **dadurch gekennzeichnet, daß** der Bajonettverschluß (5) mit einem Schloß (22) in Wirkverbindung steht, welches mittels eines Schlüssels (23) verstellbar ist und in einer Schließstellung eine Verdrehsicherung für die Elemente (3, 4) bildet.
